# EUROPEAN PATENT SPECIFICATION

(11) **EP 4 499 761 B1**
(45) Date of publication and mention of the grant of the patent: **06.05.2026**
(21) Application number: 23715905.8
(22) Date of filing: 24.03.2023
(51) Int. Cl.: C09D 11/101, C09D 11/38

(54) **PRINTING INK**
DRUCKFARBE
ENCRE D'IMPRESSION

(30) Priority: 25.03.2022 GB 202204257
(43) Date of publication of application: 05.02.2025
(73) Proprietor: Fujifilm Speciality Ink Systems Limited, Broadstairs, Kent CT10 2LE (GB)
(72) Inventor: OSBORNE, Gemma, Broadstairs, Kent CT10 2LE (GB)
(74) Representative: Elkington and Fife LLP
(86) International application number: PCT/GB2023/050749
(87) International publication number: WO 2023/180756

(56) References cited:
- EP-A1- 3 067 396
- WO-A1-2022/234290
- US-A1- 2017 137 642
- US-A1- 2017 137 653

## Description

The present invention relates to a printing ink and, in particular, an inkjet ink which has a desirable balance of properties. The present invention also relates to a method of printing said ink.

In inkjet printing, minute droplets of black, white or coloured ink are ejected in a controlled manner from one or more reservoirs or printing heads through narrow nozzles on to a substrate, which is moving relative to the reservoirs. The ejected ink forms an image on the substrate.

For high-speed printing, the inks must flow rapidly from the printing heads, and, to ensure that this happens, they must have in use a low viscosity, typically 200 mPas or less at 25°C, although in most applications the viscosity should be 50 mPas or less, and often 25 mPas or less. Typically, when ejected through the nozzles, the ink has a viscosity of less than 25 mPas, preferably 5-15 mPas and most preferably between 7-11 mPas at the jetting temperature, which is often elevated to, but not limited to 40-50°C (the ink might have a much higher viscosity at ambient temperature). The inks must also be resistant to drying or crusting in the reservoirs or nozzles. For these reasons, inkjet inks for application at or near ambient temperatures are commonly formulated to contain a large proportion of a mobile liquid vehicle or solvent such as water or a low-boiling solvent or mixture of solvents.

Another type of inkjet ink contains unsaturated organic compounds, termed monomers and/or oligomers, which polymerise when cured. This type of ink has the advantage that it is not necessary to evaporate the liquid phase to dry the print; instead the print is cured, a process which is more rapid than evaporation of solvent at moderate temperatures.

It can be difficult to formulate inkjet inks with a low viscosity which also have a desirable balance of properties. For example, typical monofunctional monomers such as PEA, CTFA and IBOA provide inks with a high cure speed and resistant film properties but these monomers have a relatively high viscosity, which does not provide inks with the desired low viscosity. In contrast, low viscosity monofunctional monomers such as TMCHA and IDA provide inks with the desired low viscosity but these monomers often limit cure sensitivity and reduce flexibility of the cured film.

Even THFA, which can provide inks with the desired viscosity and flexibility, is not desirable in terms of the safety profile of the ink. In this regard, THFA is a hazardous monomer and bears the GHS hazard statement H314 (causes severe skin burns and eye damage). There is also growing evidence that it may damage fertility or the unborn child.

US 2017/137642 relates to an ultraviolet-curable composition containing a polymerizable compound, a metal powder and a dendritic polymer, which contains a fluorine atom.

EP 3 067 396 relates to an ultraviolet curable composition containing a polymerizable compound and metal powder, in which the metal powder contains a material which is subjected to surface treatment as a constituting particle, and a volume average particle size of the metal powder is in a range of 0.2 µm to 0.64 µm.

US 2017/137653 relates to an ultraviolet-curable composition, which is discharged with an ink jet method and includes a polymerizable compound, a metal powder and a thixotropy suppressing agent, in which a relationship of η2-η1≦3 is satisfied between a viscosity η1 [mPa s] at a shearing speed of 1000 sec⁻¹ and a viscosity η2 [mPa s] which is determined by measuring in a state where the shearing speed is 10 sec⁻¹ after continuing to add shearing stress for 10 minutes at the shearing speed of 1000 sec⁻¹.

WO 2022/234290 relates to a white inkjet ink comprising: tricyclodecane dimethanol diacrylate; at least one of a difunctional urethane (meth)acrylate oligomer, (2-methyl-2-ethyl-1,3-dioxolane-4-yl)methyl acrylate and a polyethylene glycol diacrylate; a white pigment; and a monofunctional monomer, other than (2-methyl-2-ethyl-1,3-dioxolane-4-yl)methyl acrylate.

There is therefore a need in the art for an inkjet ink which has a suitably low viscosity and which has a desirable balance of properties such as cure speed, adhesion, elongation, flexibility, resistance and safety profile.

Accordingly, the present invention provides an inkjet ink comprising benzyl acrylate, (2-methyl-2-ethyl-1,3-dioxolane-4-yl)methyl acrylate, a di- and/or multifunctional (meth)acrylate monomer and an N-vinyl amide monomer and/or an N-(meth)acryloyl amine monomer, wherein the ink has a viscosity of less than 15 mPas at 25°C.

The present invention will now be described with reference to the accompanying drawings, in which:
Figs. 1-8 show the results of an adhesion test for inks of the present invention compared to comparative inks; and
Figs. 9-12 show the results of an elongation test for inks of the present invention compared to comparative inks.

The inventors have surprisingly found that the inclusion of benzyl acrylate in combination with (2-methyl-2-ethyl-1,3-dioxolane-4-yl)methyl acrylate and an N-vinyl amide monomer and/or an N-(meth)acryloyl amine monomer provides an inkjet ink with the desired balance of properties including cure speed, adhesion, elongation, flexibility, surface resistance and safety profile, whilst maintaining a low viscosity of less than 15 mPas at 25°C.

The inkjet ink of the present invention comprises benzyl acrylate.

Benzyl acrylate is a monofunctional (meth)acrylate monomer having the following structure:

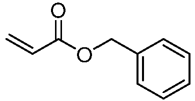

Benzyl acrylate has CAS number 2495-35-4.

As is known in the art, monomers may possess different degrees of functionality, which include mono, di, tri and higher functionality monomers. For the avoidance of doubt, mono and difunctional are intended to have their standard meanings, i.e. one or two groups, respectively, which take part in the polymerisation reaction on curing. Multifunctional (which does not include difunctional) is intended to have its standard meaning, i.e. three or more groups, respectively, which take part in the polymerisation reaction on curing.

Benzyl acrylate is a monofunctional (meth)acrylate monomer and has one (meth)acrylate group which takes part in the polymerisation reaction on curing. For the avoidance of doubt, (meth)acrylate is intended herein to have its standard meaning, i.e. acrylate and/or methacrylate.

The inventors have found that the inclusion of benzyl acrylate in combination with (2-methyl-2-ethyl-1,3-dioxolane-4-yl)methyl acrylate and an N-vinyl amide monomer and/or an N-(meth)acryloyl amine monomer provides an inkjet ink with the desired balance of properties including cure speed, adhesion, elongation, flexibility, surface resistance and safety profile, whilst maintaining a low viscosity of less than 15 mPas at 25°C.

Benzyl acrylate has a very low viscosity of 2-3 mPas at 25°C. Whilst such low viscosity monomers can provide an inkjet ink with a very low viscosity, they can also negatively affect cure speed and properties of the cured ink film such as flexibility, especially when used at high concentrations. By cure speed is meant the speed at which the actinic radiation source moves relative to the substrate. An advantage of a high cure speed is that a low dose per unit area is required to achieve a fully cured film.

However, the inventors have surprisingly found that the cure speed of the inkjet ink of the present invention containing benzyl acrylate in combination with an N-vinyl amide monomer and/or an N-(meth)acryloyl amine monomer is superior compared to an inkjet ink containing other low viscosity monomers such as TMCHA and IDA. Therefore, the inclusion of benzyl acrylate in the inkjet ink of the present invention means that the ink is suitable for ultra-low viscosity, high speed printing applications without the need for heating the ink to reduce the viscosity.

Enhanced crosslinking between the specific blend of monomers of the inkjet ink of the present invention and in particular benzyl acrylate in combination with an N-vinyl amide monomer and/or an N-(meth)acryloyl amine monomer also provides the cured ink film with good surface resistance.

High flexibility of the cured ink film is also surprisingly achieved using the specific blend of monomers of the present invention. In this regard, the inclusion of low Tg components such as benzyl acrylate and (2-methyl-2-ethyl-1,3-dioxolane-4-yl)methyl acrylate in the inkjet ink of the present invention enables excellent flexibility at room temperature and below.

In a preferred embodiment, the inkjet ink comprises 25 to 70% by weight, preferably 30 to 65% by weight, more preferably 35 to 60% by weight, of benzyl acrylate, based on the total weight of the ink. It is surprising that an ink containing such a high amount of benzyl acrylate can maintain such a high cure speed.

The inkjet ink of the present invention comprises (2-methyl-2-ethyl-1,3-dioxolane-4-yl)methyl acrylate (MEDA/Medol 10).

(2-Methyl-2-ethyl-1,3-dioxolane-4-yl)methyl acrylate is a monofunctional (meth)acrylate monomer with the following structure:

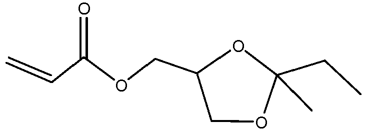

(2-Methyl-2-ethyl-1,3-dioxolane-4-yl)methyl acrylate has CAS number 69701-99-1, and is sometimes named alternatively as (2-methyl-2-ethyl-1,3-dioxoran-4-yl) methyl acrylate.

(2-Methyl-2-ethyl-1,3-dioxolane-4-yl)methyl acrylate contributes to providing the inkjet ink of the present invention with the desired balance of properties including cure speed, adhesion, elongation, flexibility, surface resistance and safety profile, whilst maintaining a low viscosity of less than 15 mPas at 25°C.

In a preferred embodiment, the inkjet ink comprises 1 to 30% by weight, preferably 2 to 25% by weight, more preferably 3 to 25% by weight, of (2-methyl-2-ethyl-1,3-dioxolane-4-yl)methyl acrylate, based on the total weight of the ink.

The inkjet ink may also comprise a monofunctional (meth)acrylate monomer other than benzyl acrylate and (2-methyl-2-ethyl-1,3-dioxolane-4-yl)methyl acrylate. Monofunctional (meth)acrylate monomers other than benzyl acrylate and (2-methyl-2-ethyl-1,3-dioxolane-4-yl)methyl acrylate are well known in the art and are preferably the esters of acrylic acid. A detailed description is therefore not required. Mixtures of (meth)acrylates may also be used.

The substituents of the monofunctional (meth)acrylate monomer other than benzyl acrylate and (2-methyl-2-ethyl-1,3-dioxolane-4-yl)methyl acrylate are not limited other than by the constraints imposed by the use in an inkjet ink, such as viscosity, stability, toxicity etc.

In a preferred embodiment, the inkjet ink comprises 40 to 80% by weight in total, more preferably 45 to 75% by weight in total and most preferably 50 to 70% in total of monofunctional (meth)acrylate monomers including benzyl acrylate and (2-methyl-2-ethyl-1,3-dioxolane-4-yl)methyl acrylate, based on the total weight of the ink.

The monofunctional (meth)acrylate monomer other than benzyl acrylate and (2-methyl-2-ethyl-1,3-dioxolane-4-yl)methyl acrylate, may be a cyclic monofunctional (meth)acrylate monomer and/or an acyclic-hydrocarbon monofunctional (meth)acrylate monomer.

When present, the monofunctional (meth)acrylate monomer other than benzyl acrylate and (2-methyl-2-ethyl-1,3-dioxolane-4-yl)methyl acrylate may comprise a cyclic monofunctional (meth)acrylate monomer.

The substituents of the cyclic monofunctional (meth)acrylate monomer are typically cycloalkyl, aryl and combinations thereof, any of which may be interrupted by heteroatoms and/or substituted by alkyl. Non-limiting examples of substituents commonly used in the art include C₃₋₁₈ cycloalkyl, C₆₋₁₀ aryl and combinations thereof, any of which may substituted with alkyl (such as C₁₋₁₈ alkyl) and/or any of which may be interrupted by 1-10 heteroatoms, such as oxygen or nitrogen, with nitrogen further substituted by any of the above described substituents. The substituents may together also form a cyclic structure.

The cyclic monofunctional (meth)acrylate monomer may be selected from isobornyl acrylate (IBOA), phenoxyethyl acrylate (PEA), cyclic TMP formal acrylate (CTFA), tetrahydrofurfuryl acrylate (THFA), isopropylidene glycerol acrylate (IPGA), 4-tert-butylcyclohexyl acrylate (TBCHA), 3,3,5-trimethylcyclohexyl acrylate (TMCHA) and mixtures thereof.

THFA is often used to provide good adhesion to a variety of substrates, as well as producing a flexible film which is less liable to cracking and delamination. A further advantage of THFA is that it can solubilise chlorinated polyolefins, which in turn provides good adhesion to polyolefin substrates. However, THFA is a hazardous monomer and bears the GHS hazard statement H314 (causes severe skin burns and eye damage). There is also growing evidence that it may damage fertility or the unborn child. Thus, there is an urgent need in the art to move away from THFA.

The ink will still function in the presence of tetrahydrofurfuryl acrylate (THFA), in terms of its printing and curing properties. However, to avoid the hazardous nature of THFA, the inkjet ink preferably contains less than 2% by weight, more preferably less than 1% by weight and most preferably is substantially free of THFA, where the amounts are based on the total weight of the ink.

By substantially free is meant that only small amounts will be present, for example as impurities in the radiation-curable materials present or as a component in a commercially available pigment dispersion. In other words, no THFA is intentionally added to the ink. However, minor amounts of THFA, which may be present as impurities in commercially available inkjet ink components, are tolerated. For example, the ink may comprise less than 0.5% by weight of THFA, more preferably less than 0.1% by weight of THFA, most preferably less than 0.05% by weight of THFA, based on the total weight of the ink. In a preferred embodiment, the inkjet ink is free of THFA.

When present, the monofunctional (meth)acrylate monomer other than benzyl acrylate and (2-methyl-2-ethyl-1,3-dioxolane-4-yl)methyl acrylate may comprise an acyclic-hydrocarbon monofunctional (meth)acrylate monomer.

The substituents of the acyclic-hydrocarbon monofunctional (meth)acrylate monomer are typically alkyl, which may be interrupted by heteroatoms. A non-limiting example of a substituent commonly used in the art is C₁₋₁₈ alkyl, which may be interrupted by 1-10 heteroatoms, such as oxygen or nitrogen, with nitrogen further substituted.

The acyclic-hydrocarbon monofunctional (meth)acrylate monomer contains a linear or branched C₆-C₂₀ group. It may be selected from octadecyl acrylate (ODA), 2-(2-ethoxyethoxy)ethyl acrylate, tridecyl acrylate (TDA), isodecyl acrylate (IDA), lauryl acrylate and mixtures thereof.

Preferably however, the inkjet ink preferably contains less than 10% by weight, more preferably less than 5% by weight, and most preferably is substantially free of monofunctional (meth)acrylate monomers other than benzyl acrylate and (2-methyl-2-ethyl-1,3-dioxolane-4-yl)methyl acrylate, based on the total weight of the ink. Such small amounts of monofunctional (meth)acrylate monomers other than benzyl acrylate and (2-methyl-2-ethyl-1 ,3-dioxolane-4-yl)methyl acrylate may be tolerated, even if these monofunctional (meth)acrylate monomers would negatively impact the desired properties of the inkjet ink including cure speed, adhesion, elongation, flexibility, surface resistance and safety profile if present in large amounts.

By substantially free is meant that only small amounts will be present, for example as impurities in the radiation-curable materials present or as a component in a commercially available pigment dispersion. In other words, no monofunctional (meth)acrylate monomers other than benzyl acrylate and (2-methyl-2-ethyl-1,3-dioxolane-4-yl)methyl acrylate are intentionally added to the ink. However, minor amounts of monofunctional (meth)acrylate monomers other than benzyl acrylate and (2-methyl-2-ethyl-1,3-dioxolane-4-yl)methyl acrylate, which may be present as impurities in commercially available inkjet ink components, are tolerated. For example, the ink may comprise less than 0.5% by weight, more preferably less than 0.1% by weight, and most preferably less than 0.05% by weight of monofunctional (meth)acrylate monomers other than benzyl acrylate and (2-methyl-2-ethyl-1,3-dioxolane-4-yl)methyl acrylate, based on the total weight of the ink. In a preferred embodiment, the inkjet ink is free of monofunctional (meth)acrylate monomers other than benzyl acrylate and (2-methyl-2-ethyl-1,3-dioxolane-4-yl)methyl acrylate.

In a preferred embodiment, benzyl acrylate and (2-methyl-2-ethyl-1,3-dioxolane-4-yl)methyl acrylate are the sole monofunctional (meth)acrylate monomers present in the ink. Such monofunctional (meth)acrylate monomers have a good safety profile.

The inkjet ink of the present invention comprises an N-vinyl amide monomer and/or an N-(meth)acryloyl amine monomer.

N-Vinyl amide monomers are well-known monomers in the art. N-Vinyl amide monomers have a vinyl group attached to the nitrogen atom of an amide which may be further substituted in an analogous manner to the (meth)acrylate monomers. Preferred examples are N-vinyl caprolactam (NVC), N-vinyl pyrrolidone (NVP), N-vinyl piperidone, N-vinyl formamide and N-vinyl acetamide.

Similarly, N-acryloyl amine monomers are also well-known in the art. N-Acryloyl amine monomers also have a vinyl group attached to an amide but via the carbonyl carbon atom and again may be further substituted in an analogous manner to the (meth)acrylate monomers. A preferred example is N-acryloylmorpholine (ACMO).

In a preferred embodiment, the inkjet ink comprises NVC and/or ACMO.

Preferably, the inkjet ink comprises an N-vinyl amide monomer, preferably NVC.

In a preferred embodiment, the inkjet ink comprises 5 to 35% by weight, more preferably 10 to 30% by weight and most preferably 15 to 25% by weight in total of an N-vinyl amide monomer and/or an N-(meth)acryloyl amine monomer, based on the total weight of the ink. More preferably, the inkjet ink comprises 5 to 35% by weight, more preferably 10 to 30% by weight and most preferably 15 to 25% by weight of an N-vinyl amide monomer, based on the total weight of the ink. Most preferably, the inkjet ink comprises 5 to 35% by weight, more preferably 10 to 30% by weight and most preferably 15 to 25% by weight of NVC, based on the total weight of the ink.

The inkjet ink may also comprise one or more N-vinyl monomers other than an N-vinyl amide monomer and/or an N-(meth)acryloyl amine monomer. Examples include N-vinyl carbazole, N-vinyl indole and N-vinyl imidazole.

In a preferred embodiment, the inkjet ink comprises 65 to 90% by weight in total, more preferably 70 to 90% by weight in total and most preferably 75 to 90% by weight in total of monofunctional monomers including benzyl acrylate, (2-methyl-2-ethyl-1,3-dioxolane-4-yl)methyl acrylate, and an N-vinyl amide monomer and/or an N-(meth)acryloyl amine monomer, based on the total weight of the ink. Such a high monofunctional monomer content ensures excellent adhesion of the cured ink film, whilst maintaining a low viscosity of the inkjet ink.

Preferably, benzyl acrylate, (2-methyl-2-ethyl-1,3-dioxolane-4-yl)methyl acrylate, and an N-vinyl amide monomer and/or an N-(meth)acryloyl amine monomer are the sole monofunctional monomers present in the ink. Such monofunctional monomers are preferred as they are considered less hazardous than some other monofunctional monomers such as THFA.

The inkjet ink further comprises a di- and/or multifunctional monomer, specifically a di- and/or multifunctional (meth)acrylate monomer.

In a preferred embodiment, the di- and/or multifunctional monomer is a di-, tri-, tetra-, penta- or hexa- functional monomer, i.e. the di- and/or multifunctional monomer has two, three, four, five or six functional groups.

The functional group of a di- and/or multifunctional monomer may be the same or different but must take part in the polymerisation reaction on curing. Examples of such functional groups include any groups that are capable of polymerising upon exposure to radiation and are preferably selected from a (meth)acrylate group and a vinyl ether group.

The di- and/or multifunctional monomer may possess different degrees of functionality, and a mixture including combinations of di, tri and higher functionality monomers may be used.

The substituents of the di- and/or multifunctional monomer are not limited other than by the constraints imposed by the use in an ink-jet ink, such as viscosity, stability, toxicity etc. The substituents are typically alkyl, cycloalkyl, aryl and combinations thereof, any of which may be interrupted by heteroatoms. Non-limiting examples of substituents commonly used in the art include C₁₋₁₈ alkyl, C₃₋₁₈ cycloalkyl, C₆₋₁₀ aryl and combinations thereof, such as C₆₋₁₀ aryl- or C₃₋₁₈ cycloalkyl-substituted C₁₋₁₈ alkyl, any of which may be interrupted by 1-10 heteroatoms, such as oxygen or nitrogen, with nitrogen further substituted by any of the above described substituents. The substituents may together also form a cyclic structure.

In a preferred embodiment, the inkjet ink comprises 15% by weight or less in total, more preferably 10% by weight or less in total of a di- and/or multifunctional monomer, based on the total weight of the ink. In a particularly preferred embodiment, the inkjet ink comprises 0.5 to 15.0% by weight in total, more preferably 0.5 to 10.0% by weight in total of a di- and/or multifunctional monomer, based on the total weight of the ink.

Examples of di- and/or multifunctional monomer include difunctional (meth)acrylate monomers, multifunctional (meth)acrylate monomers, divinyl ether monomers, multifunctional vinyl ether monomers and di- and/or multifunctional vinyl ether (meth)acrylate monomers. Mixtures of di- and/or multifunctional monomers may also be used.

The di- and/or multifunctional monomer comprises a di- and/or multifunctional (meth)acrylate monomer. In a preferred embodiment, the inkjet ink comprises a difunctional (meth)acrylate monomer. In another preferred embodiment, the inkjet ink comprises a multifunctional (meth)acrylate monomer. In a particularly preferred embodiment, the inkjet ink comprises a di- and a multifunctional (meth)acrylate monomer.

Difunctional (meth)acrylate monomers are well known in the art and a detailed description is therefore not required. Examples include hexanediol diacrylate (HDDA), 1,8-octanediol diacrylate, 1,9-nonanediol diacrylate, 1,10-decanediol diacrylate (DDDA), 1,11-undecanediol diacrylate and 1,12-dodecanediol diacrylate, polyethylene glycol diacrylate (for example tetraethylene glycol diacrylate, PEG200DA, PEG300DA, PEG400DA, PEG600DA), dipropylene glycol diacrylate (DPGDA), tripropylene glycol diacrylate (TPGDA), tricyclodecane dimethanol diacrylate (TCDDMDA), neopentylglycol diacrylate, 3-methyl-1,5-pentanediol diacrylate (3-MPDA), and the acrylate esters of ethoxylated or propoxylated glycols and polyols, for example, propoxylated neopentylglycol diacrylate (NPGPODA), and mixtures thereof. Also included are esters of methacrylic acid (i.e. methacrylates), such as hexanediol dimethacrylate, 1,8-octanediol dimethacrylate, 1,9-nonanediol dimethacrylate, 1,10-decanediol dimethacrylate, 1,11-undecanediol dimethacrylate and 1,12-dodecanediol dimethacrylate, triethyleneglycol dimethacrylate, diethyleneglycol dimethacrylate, ethyleneglycol dimethacrylate, 1,4-butanediol dimethacrylate and mixtures thereof. PEG600DA and TPGDA are particularly preferred.

Preferably, the inkjet ink comprises 10% by weight or less, more preferably 8% by weight or less and most preferably 6% by less of a difunctional (meth)acrylate monomer, based on the total weight of the ink. Preferably, the inkjet ink comprises 0.5 to 10.0% by weight, more preferably 0.5 to 8.0% by weight and most preferably 0.5 to 6.0% by weight of a difunctional (meth)acrylate monomer, based on the total weight of the ink.

In a preferred embodiment, the inkjet ink comprises polyethylene glycol 600 diacrylate. Polyethylene glycol 600 diacrylate is commercially available as SR 610 from Sartomer. The number 600 refers to the molecular weight of the polyethylene glycol diacrylate. In polyethylene glycol 600 diacrylate, the number of repeating ethylene glycol units is 13. In contrast, the number of repeating ethylene glycol units in polyethylene glycol 400 diacrylate is 9. Preferably, the inkjet ink comprises polyethylene glycol 600 diacrylate in 0.5 to 10.0% by weight, more preferably 0.5 to 8.0% by weight and most preferably 0.5 to 5.0% by weight, based on the total weight of the ink.

The inventors have found that the inclusion of polyethylene glycol 600 diacrylate in the inkjet ink of the invention is particularly preferred as it further improves adhesion, cure speed and elongation, whilst maintaining an ultra-low viscosity.

In another preferred embodiment, the inkjet ink comprises tripropylene glycol diacrylate (TPGDA). Preferably, the inkjet ink comprises TPGDA in 0.5 to 5.0% by weight, more preferably 0.5 to 4.0% by weight and most preferably 0.5 to 3.0% by weight, based on the total weight of the ink.

The inventors have found that the inclusion of TPGDA in the inkjet ink of the invention is particularly preferred as it further improves adhesion and cure speed, whilst maintaining an ultra-low viscosity.

In a particularly preferred embodiment, the inkjet ink comprises polyethylene glycol 600 diacrylate and TPGDA, preferably in the preferred amounts.

Suitable multifunctional (meth)acrylate monomers (which do not include difunctional (meth)acrylate monomers) include tri-, tetra-, penta-, hexa-, hepta- and octa-functional monomers. Examples of the multifunctional acrylate monomers that may be included in the inkjet inks include trimethylolpropane triacrylate, dipentaerythritol triacrylate, tri(propylene glycol) triacrylate, di(pentaerythritol) hexaacrylate (DPHA), and the acrylate esters of ethoxylated or propoxylated glycols and polyols, for example, ethoxylated trimethylolpropane triacrylate and ethoxylated pentaerythritol tetraacrylate (EOPETTA, also known as PPTTA), and mixtures thereof. Suitable multifunctional (meth)acrylate monomers also include esters of methacrylic acid (i.e. methacrylates), such as trimethylolpropane trimethacrylate. Mixtures of (meth)acrylates may also be used. DPHA is particularly preferred.

Preferably, the inkjet ink comprises 5% by weight or less, more preferably 4% by weight or less and most preferably 2% by weight or less of a multifunctional (meth)acrylate monomer, based on the total weight of the ink. Preferably, the inkjet ink comprises 0.5 to 5.0% by weight, more preferably 0.5 to 4.0% by weight and most preferably 0.5 to 2.0% by weight of a multifunctional (meth)acrylate monomer, based on the total weight of the ink.

The inkjet ink of the present invention may further comprise a di- and/or multifunctional monomer which has at least one vinyl ether functional group. Examples include a divinyl ether monomer, a multifunctional vinyl ether monomer, a vinyl ether (meth)acrylate monomer and/or a multifunctional vinyl ether (meth)acrylate monomer.

Examples of a divinyl ether monomer include triethylene glycol divinyl ether (DVE-3), diethylene glycol divinyl ether, 1,4-cyclohexanedimethanol divinyl ether, bis[4-(vinyloxy)butyl] 1,6-hexanediylbiscarbamate, bis[4-(vinyloxy)butyl] isophthalate, bis[4-(vinyloxy)butyl] (methylenedi-4,1-phenylene)biscarbamate, bis[4-(vinyloxy)butyl] succinate, bis[4-(vinyloxy)butyl]terephthalate, bis[4-(vinyloxymethyl)cyclohexylmethyl] glutarate, 1,4-butanediol divinyl ether and mixtures thereof.

An example of a multifunctional vinyl ether monomer is tris[4-(vinyloxy)butyl] trimellitate.

Examples of a vinyl ether (meth)acrylate monomer include 2-(2-vinyloxy ethoxy)ethyl acrylate (VEEA), 2-(2-vinyloxy ethoxy)ethyl methacrylate (VEEM) and mixtures thereof.

The di- and/or multifunctional monomer is preferably selected from 1,10-decanediol diacrylate (DDDA), hexanediol diacrylate (HDDA), polyethylene glycol 600 diacrylate, tripropylene glycol diacrylate (TPGDA), 3-methyl 1,5- pentanediol diacrylate (3-MPDA), dipropylene glycol diacrylate (DPGDA), tricyclodecane dimethanol diacrylate (TCDDMDA), propoxylated neopentyl glycol diacrylate (NPGPODA), trimethylolpropane triacrylate (TMPTA), di-trimethylolpropane tetraacrylate (DiTMPTA), dipentaerythritol hexaacrylate (DPHA), ethoxylated trimethylolpropane triacrylate (EOTMPTA), ethoxylated pentaerythritol tetraacrylate (EOPETTA), triethylene glycol divinyl ether (DVE-3) and mixtures thereof.

The inkjet ink comprises benzyl acrylate, (2-methyl-2-ethyl-1,3-dioxolane-4-yl)methyl acrylate, a di- and/or multifunctional (meth)acrylate monomer, and an N-vinyl amide monomer and/or an N-(meth)acryloyl amine monomer. More preferably, the inkjet ink comprises benzyl acrylate, (2-methyl-2-ethyl-1,3-dioxolane-4-yl)methyl acrylate, a difunctional (meth)acrylate monomer, and an N-vinyl amide monomer and/or an N-(meth)acryloyl amine monomer. Most preferably, the inkjet ink comprises benzyl acrylate, (2-methyl-2-ethyl-1,3-dioxolane-4-yl)methyl acrylate, a difunctional (meth)acrylate monomer, a multifunctional (meth)acrylate monomer, and an N-vinyl amide monomer and/or an N-(meth)acryloyl amine monomer.

In a particularly preferred embodiment, the inkjet ink comprises benzyl acrylate, (2-methyl-2-ethyl-1,3-dioxolane-4-yl)methyl acrylate, polyethylene glycol 600 diacrylate, and an N-vinyl amide monomer and/or an N-(meth)acryloyl amine monomer. More preferably, the inkjet ink comprises benzyl acrylate, (2-methyl-2-ethyl-1,3-dioxolane-4-yl)methyl acrylate, polyethylene glycol 600 diacrylate, TPGDA, and an N-vinyl amide monomer and/or an N-(meth)acryloyl amine monomer. Most preferably, the inkjet ink comprises benzyl acrylate, (2-methyl-2-ethyl-1,3-dioxolane-4-yl)methyl acrylate, polyethylene glycol 600 diacrylate, TPGDA, DPHA, and an N-vinyl amide monomer and/or an N-(meth)acryloyl amine monomer.

Monomers typically have a molecular weight of less than 600, preferably more than 130 and less than 450. Monomers are typically added to inkjet inks to reduce the viscosity of the inkjet ink. They therefore preferably have a viscosity of less than 150 mPas at 25°C, more preferably less than 100mPas at 25°C and most preferably less than 20 mPas at 25°C. Monomer viscosities can be measured using a rotational rheometer, which uses a 40 mm oblique / 2° steel cone at 25°C with a shear rate of 25 s⁻¹, such as an ARG2 rheometer manufactured by T.A. Instruments.

In a preferred embodiment, the ink contains less than 2% by weight in total, more preferably less than 1% by weight in total, and most preferably is substantially free of category 1A and 1B carcinogenic, mutagenic and reprotoxic substances (CMR substances), based on the total weight of the ink. More preferably, the ink contains less than 2% by weight in total, more preferably less than 1% by weight in total, and most preferably is substantially free of category 1A, 1B and 2 CMR substances, based on the total weight of the ink.

Classification of CMR substances in the EU is based on the strength of evidence showing that they present one of the CMR types of hazards to human health. The EU legislation regarding Classification Labelling and Packaging of substances (the CLP Regulation 1272/2008) uses the following categories to define CMR substances. Category 1A defines CMR substances as those known to have CMR potential for humans, based largely on human evidence. Category 1B defines CMR substances as those presumed to have CMR potential for humans, based largely on experimental animal data. Category 2 defines CMR substances as those suspected to have CMR potential for humans.

By substantially free is meant that only small amounts will be present, for example as impurities in the radiation-curable materials present or as a component in a commercially available pigment dispersion. In other words, no category 1A and 1B CMR substances (or category 1A, 1B and 2 CMR substances) are intentionally added to the ink. However, minor amounts of category 1A and 1B CMR substances (or category 1A, 1B and 2 CMR substances), which may be present as impurities in commercially available inkjet ink components, are tolerated. For example, the ink may contain less than 0.5% by weight, more preferably less than 0.1% by weight and most preferably less than 0.05% by weight of category 1A and 1B CMR substances (preferably category 1A, 1B and 2 CMR substances), based on the total weight of the ink. In a preferred embodiment, the inkjet ink is free of category 1A and 1B CMR substances (preferably category 1A, 1B and 2 CMR substances).

The inkjet ink of the present invention may further comprise a radiation-curable (i.e. polymerisable) oligomer, such as a (meth)acrylate oligomer. Any radiation-curable oligomer that is compatible with the other ink components is suitable for use in the ink. Preferably, the inkjet ink comprises a (meth)acrylate oligomer.

The term "curable oligomer" has its standard meaning in the art, namely that the component is partially reacted to form a pre-polymer having a plurality of repeating monomer units, which is capable of further polymerisation. The oligomer preferably has a molecular weight of at least 600. The molecular weight is preferably 4,000 or less. Molecular weights (number average) can be calculated if the structure of the oligomer is known or molecular weights can be measured using gel permeation chromatography using polystyrene standards.

The oligomers may possess different degrees of functionality, and a mixture including combinations of mono, di, tri and higher functionality oligomers may be used. The degree of functionality of the oligomer determines the degree of crosslinking and hence the properties of the cured ink. The oligomer is preferably multifunctional meaning that it contains on average more than one reactive functional group per molecule. The average degree of functionality is preferably from 2 to 6.

Oligomers are typically added to inkjet inks to increase the viscosity of the inkjet ink or to provide film-forming properties such as hardness or cure speed. They therefore preferably have a viscosity of 150 mPas or above at 25°C. Preferred oligomers for inclusion in the ink of the invention have a viscosity of 0.5 to 10 Pas at 50°C. Oligomer viscosities can be measured using an ARG2 rheometer manufactured by T.A. Instruments, which uses a 40 mm oblique / 2° steel cone at 60°C with a shear rate of 25 s ⁻¹.

Radiation-curable oligomers comprise a backbone, for example a polyester, urethane, epoxy or polyether backbone, and one or more radiation-curable groups.

The polymerisable group can be any group that is capable of polymerising upon exposure to radiation. Preferably the oligomers are (meth)acrylate oligomers. The oligomer may include amine functionality, as the amine acts as an activator without the drawback of migration associated with low-molecular weight amines. When present, the radiation-curable oligomer is preferably amine modified. More preferably, when present, the radiation-curable oligomer is an amine-modified (meth)acrylate oligomer.

Other suitable examples of radiation-curable oligomers include epoxy based materials such as bisphenol A epoxy acrylates and epoxy novolac acrylates, which have fast cure speeds and provide cured films with good solvent resistance.

The amount of radiation-curable oligomer, when present, is preferably 0.1-10% by weight, based on the total weight of the ink.

The ink may also contain a resin. The resin preferably has a weight-average molecular weight of 20-200 KDa and preferably 20-60 KDa, as determined by GPC with polystyrene standards. The resin is preferably solid at 25°C. It is preferably soluble in the liquid medium of the ink (the radiation-curable diluent and, when present, additionally the solvent).

The resin is a passive (i.e. inert) resin, in the sense that it is not radiation curable and hence does not undergo cross-linking under the curing conditions to which the ink is subjected.

The resin may improve adhesion of the ink to the substrate. It is preferably soluble in the ink. The resin, when present, is preferably present at 0.1-5% by weight, based on the total weight of the ink.

If the ink is cured by exposure to a source of actinic radiation without an inert environment, one or more photoinitiators will be required. If the ink is cured by exposure to a source of low-energy electron beam radiation or a source of actinic radiation in an inert environment, the ink may still contain a photoinitiator, although photoinitiators are not required.

In a preferred embodiment, the inkjet ink further comprises a photoinitiator.

Preferred are photoinitiators which produce free radicals on irradiation (free radical photoinitiators) such as, for example, diphenyl(2,4,6-trimethylbenzoyl)phosphine oxide (TPO), ethyl phenyl (2,4,6-trimethylbenzoyl) phosphinate (TPO-L), benzophenone, 1-hydroxycyclohexyl phenyl ketone, 2-benzyl-2-dimethylamino-(4-morpholinophenyl)butan-1-one, benzil dimethylketal, phenylbis(2,4,6-trimethylbenzoyl) phosphine oxide (BAPO), 2-isopropylthioxanthone (ITX), 2,4-diethylthioxanthone (DETX) or mixtures thereof. Such photoinitiators are known and commercially available such as, for example, under the trade names Omnirad (from IGM) and Esacure (from Lamberti).

In a preferred embodiment, the inkjet ink comprises BAPO. Preferably, the inkjet ink comprises BAPO in 0.5 to 5.0% by weight, more preferably 1.0 to 4.5% by weight and most preferably 2.0 to 4.0% by weight, based on the total weight of the ink.

The inventors have found that the inclusion of BAPO in the inkjet ink of the invention is particularly preferred as it further improves elongation, whilst maintaining an ultra-low viscosity.

The inkjet ink may also comprise one or more polymeric photoinitiators, such as Omnipol TP^{®}.

Omnipol TP^{®} is commercially available from IGM. It is a polymeric phosphine oxide photoinitiator, and is known by the chemical name polymeric ethyl (2,4,6-trimethylbenzoyl)-phenyl phosphinate or polymeric TPO-L. It has the following structure:

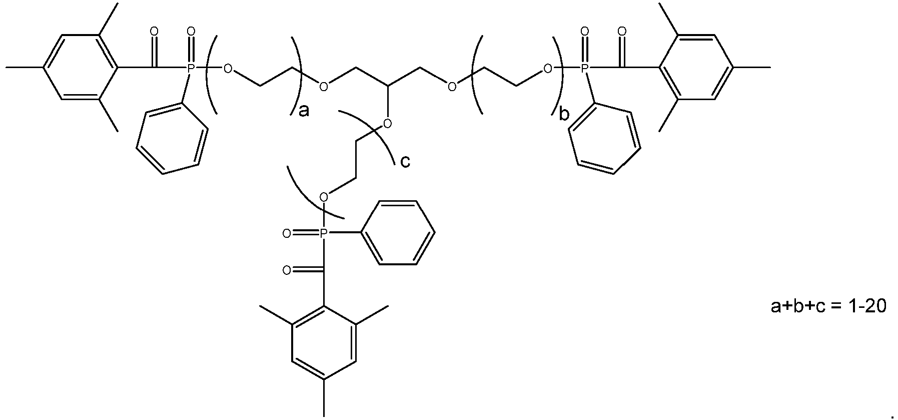

The total value of a, b and c of the chemical formula for polymeric TPO-L is equal to 1-20.

Mixtures of free radical photoinitiators can be used and preferably, the ink comprises a plurality of free radical photoinitiators. The total number of free radical photoinitiators present is preferably from one to five, and more preferably, two or more free radical photoinitiators are present in the ink.

BAPO, ITX and DETX are particularly preferred photoinitiators for inclusion in the inkjet ink of the present invention. In a preferred embodiment, the ink further comprises BAPO, more preferably BAPO in combination with ITX or DETX. In a particularly preferred embodiment, BAPO and ITX/DETX are the sole photoinitiators present in the ink.

TPO is a common photoinitiator but it is reprotoxic. TPO bears the GHS hazard statement H361 and is classified as a category 2 CMR substance with reproductive toxicity, which is suspected of damaging fertility or the unborn child.

The ink will still function in the presence of TPO, in terms of its printing and curing properties. However, to avoid the hazardous nature of TPO, the inkjet ink preferably contains less than 2% by weight, more preferably less than 1% by weight and most preferably is substantially free of TPO, based on the total weight of the ink.

By substantially free is meant that only small amounts will be present, for example as impurities in the radiation-curable materials present or as a component in a commercially available pigment dispersion. In other words, no TPO is intentionally added to the ink. However, minor amounts of TPO, which may be present as impurities in commercially available inkjet ink components, are tolerated. For example, the ink may comprise less than 0.5% by weight, more preferably less than 0.1% by weight and most preferably less than 0.05% by weight of TPO, based on the total weight of the ink. In a preferred embodiment, the inkjet ink is free of TPO.

Preferably, the photoinitiator if present, is present from 1 to 20% by weight, preferably from 5 to 15% by weight, based on the total weight of the ink.

The presence of a photoinitiator is optional because the ink can cure without the presence of a photoinitiator by curing with a low-energy electron beam or curing by actinic radiation in an inert environment.

Therefore, the photoinitiator may be present in an amount of less than 20% by weight, preferably less than 5% by weight, more preferably less than 3%, more preferably less than 1%, based on the total weight of the ink.

Therefore, in a preferred embodiment, no photoinitiator is intentionally added to the ink. However, minor amounts of photoinitiator, which may be present as impurities in commercially available inkjet ink components, are tolerated. For example, the ink may comprise less than 0.5% by weight of photoinitiator, more preferably less than 0.1% by weight of photoinitiator and most preferably less than 0.05% by weight of photoinitiator, based on the total weight of the ink. The inkjet ink may also be free of photoinitiator.

However, an inkjet ink that is cured with a low-energy electron beam or actinic radiation in an inert environment may still contain a small amount of photoinitiator such as 1 to 5% by weight of a photoinitiator, based on the total weight of the ink. This is required if the ink is first pinned with actinic radiation.

By pinning is meant arresting the flow of the ink by treating the ink droplets quickly after they have impacted onto the substrate surface. Pinning provides a partial cure of the ink and thereby maximises image quality by controlling bleed and feathering between image areas. Pinning does not achieve full cure of the ink. By curing is meant fully curing the ink. Pinning leads to a marked increase in viscosity, whereas curing converts the inkjet ink from a liquid ink to a solid film. The dose of radiation used for pinning is generally lower than the dose required to cure the radiation-curable material fully.

The inkjet ink of the present invention preferably dries primarily by curing, i.e. by the polymerisation of the monomers present, as discussed hereinabove, and hence is a curable ink. The ink does not, therefore, require the presence of water or a volatile organic solvent to effect drying of the ink.

Accordingly, the inkjet ink preferably comprises less than 5% by weight of water and volatile organic solvents combined, based on the total weight of the ink. Preferably, the inkjet ink comprises less than 3% by weight of water and volatile organic solvent combined, more preferably less than 2 % by weight combined, more preferably less than 1% by weight combined, and most preferably the inkjet ink is substantially free of water and volatile organic solvents, where the amounts are based on the total weight of the ink.

By substantially free is meant that only small amounts will be present, for example some water will typically be absorbed by the ink from the air and solvents may be present as impurities in the components of the inks, but such low levels are tolerated. In other words, no water or a volatile organic solvent is intentionally added to the ink. However, minor amounts of water or a volatile organic solvent, which may be present as impurities in commercially available inkjet ink components, are tolerated. For example, the ink may comprise less than 0.5% by weight of water or a volatile organic solvent, more preferably less than 0.1% by weight of water or a volatile organic solvent, most preferably less than 0.05% by weight of water or a volatile organic solvent, based on the total weight of the ink. In a preferred embodiment, the inkjet ink is free of water or a volatile organic solvent.

In a preferred embodiment, the inkjet ink also includes a colouring agent, which may be either dissolved or dispersed in the liquid medium of the ink. The colouring agent can be any of a wide range of suitable colouring agents that would be known to the person skilled in the art.

Preferably, the colouring agent is a pigment, of the types known in the art and commercially available such as under the trade-names Paliotol (available from BASF plc), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colouring agent is preferably present in an amount of 0.2-20% by weight, preferably 0.5-15% by weight, based on the total weight of the ink. A higher concentration of pigment may be required for white inks, for example up to and including 30% by weight, or 25% by weight, based on the total weight of the ink.

The inkjet ink preferably dries primarily by curing, i.e. by the polymerisation of the monomers present, as discussed hereinabove, and hence is a curable ink. The ink does not, therefore, require the presence of water or a volatile organic solvent to effect drying of the ink. Preferably, the inkjet ink comprises less than 5% by weight of water and volatile organic solvent combined, preferably less than 3% by weight combined, more preferably, less than 2% by weight combined and more preferably less than 1% by weight combined, and most preferably, the inkjet ink is substantially free of water and volatile organic solvents, where the amounts are based on the total weight of the ink.

By substantially free is meant that only small amounts will be present, for example some water will typically be absorbed by the ink from the air and solvents may be present as impurities in the components of the inks, but such low levels are tolerated. In other words, no water or a volatile organic solvent is intentionally added to the ink. However, minor amounts of water or a volatile organic solvent, which may be present as impurities in commercially available inkjet ink components, are tolerated. For example, the ink may comprise less than 0.5% by weight of water or a volatile organic solvent, more preferably less than 0.1% by weight of water or a volatile organic solvent, most preferably less than 0.05% by weight of water or a volatile organic solvent, based on the total weight of the ink. In a preferred embodiment, the inkjet ink is free of water or a volatile organic solvent.

In a preferred embodiment, the ink of the present invention comprises a surfactant. The surfactant controls the surface tension of the ink. Surfactants are well-known in the art and a detailed description is not required. An example of a suitable surfactant is BYK307. In a preferred embodiment, the inkjet ink comprises an acrylated surfactant. Acrylated surfactants are particularly preferred as they can be partially included in the crosslink network on cure. Preferred examples of acrylated surfactants are commercially available as Tego Rad 2010 and Tego Rad 2300.

Adjustment of the surface tension of the inks allows control of the surface wetting of the inks on various substrates, for example, plastic substrates. Too high a surface tension can lead to ink pooling and/or a mottled appearance in high coverage areas of the print. Too low a surface tension can lead to excessive ink bleed between different coloured inks. Surface tension is also critical to ensuring stable jetting (nozzle plate wetting and sustainability). The surface tension is preferably in the range of 18-40 mNm⁻¹, more preferably 20-35 mNm⁻¹ and most preferably 20-30 mNm⁻¹.

Preferably, the inkjet ink comprises 0.1 to 1.5% by weight, more preferably 0.1-0.9% by weight of a surfactant, based on the total weight of the ink.

The inventors have found that the inclusion of a surfactant in the inkjet ink of the invention in the preferred amounts is particularly preferred as it further improves adhesion and elongation, whilst maintaining an ultra-low viscosity.

Other components of types known in the art may be present in the ink of the present invention to improve the properties or performance. These components may be, for example, defoamers, dispersants, synergists, stabilisers against deterioration by heat or light other than an aerobic stabiliser, reodorants, flow or slip aids, biocides and identifying tracers.

The amounts by weight provided herein are based on the total weight of the ink.

The ink or inkjet ink sets may be prepared by known methods such as stirring with a high-speed water-cooled stirrer, or milling on a horizontal bead-mill.

The ink exhibits an ultra-low viscosity, less than 15 mPas, preferably 12 mPas or less and most preferably 10 mPas or less at 25°C. Viscosity may be measured using a rotational viscometer fitted with a thermostatically controlled cup and spindle arrangement, running at 20 rpm at 25°C.

The inkjet of the present invention having such a low viscosity is therefore suitable for high speed printing applications. Benzyl acrylate provides the inkjet ink of the present invention with a very low viscosity whilst surprisingly maintaining the desired balance of properties including cure speed, adhesion, elongation, flexibility, surface resistance and safety profile.

The present invention also provides an inkjet ink set, wherein the inkjet ink set of the invention has at least one ink that falls within the scope of the inkjet ink according to the present invention. Preferably, all of the inks in the set fall within the scope of the inkjet ink according to the present invention.

Usually, the inkjet ink set of the present invention is in the form of a multi-chromatic inkjet ink set, which typically comprises a cyan ink, a magenta ink, a yellow ink and a black ink (a so-called trichromatic set). This set is often termed CMYK. The inks in a trichromatic set can be used to produce a wide range of colours and tones.

The present invention also provides a method of inkjet printing comprising inkjet printing the inkjet ink as defined herein onto a substrate and curing the inkjet ink by exposing the inkjet ink to a curing source.

In the method of inkjet printing of the present invention, the inkjet ink is inkjet printed onto a substrate. Printing is performed by inkjet printing, e.g. on a single-pass inkjet printer, for example for printing (directly) onto a substrate, on a roll-to-roll printer or a flat-bed printer. As discussed above, inkjet printing is well known in the art and a detailed description is not required.

The ink is jetted from one or more reservoirs or printing heads through narrow nozzles on to a substrate to form a printed image.

Print heads account for a significant portion of the cost of an entry level printer and it is therefore desirable to keep the number of print heads (and therefore the number of inks in the ink set) low. Reducing the number of print heads can reduce print quality and productivity. It is therefore desirable to balance the number of print heads in order to minimise cost without compromising print quality and productivity.

Substrates include flexible and rigid substrates. Examples include substrates composed of polyvinyl chloride (PVC), polystyrene (PS), polyester, polyethylene terephthalate (PET), polyethylene terephthalate glycol modified (PETG), polyolefin (e.g. polyethylene, polypropylene or mixtures or copolymers thereof), polyester textile banner and soft signage (3P textile), polycarbonate (PC) and acrylic. Further substrates include all cellulosic materials such as paper and board, or their mixtures/blends with the aforementioned synthetic materials.

Acrylic and polypropylene are particularly challenging substrates to print onto and achieve good adhesion. However, it has surprisingly been found that the inkjet ink of the present invention can achieve excellent adhesion to both acrylic and polypropylene substrates. It is believed that high contact and minimised shrinkage of the cured ink film enables excellent adhesion to acrylic and polypropylene substrates.

The polarity of benzyl acrylate is also believed to contribute to improved wetting of the substrate, especially acrylic and polypropylene substrates.

When discussing the substrate, it is the surface which is most important, since it is the surface which is wetted by the ink. Thus, at least the surface of substrate is composed of the abovediscussed material.

The present invention may also provide a printed substrate having the ink as defined herein printed thereon. Preferably, the substrate is acrylic or polypropylene.

In order to produce a high quality printed image a small jetted drop size is desirable. Preferably the inkjet ink is jetted at drop sizes below 90 picolitres, preferably below 35 picolitres and most preferably below 10 picolitres.

The inkjet ink of the present invention is compatible with print heads that are capable of jetting drop sizes of 90 picolitres or less because of its low viscosity ink.

In a preferred embodiment, the printing head moves relative to the substrate at a speed of 50 m/min or more. Therefore, the method of inkjet printing of the present invention is preferably a method of high-speed printing. High-speed printing is a term of the art.

In high-speed printing, the printing head moves relative to the substrate at a speed of 50 m/min or more. In the method of the present invention, the printing head moves relative to the substrate at a speed of preferably 60 m/min or more, more preferably 80 m/min or more and most preferably 100 m/min or more. Typically, the printing head can move relative to the substrate at a speed of up to 300 m/min. But for some applications, the speed can be even higher than 300 m/min.

In a preferred embodiment, the printing head moves relative to the substrate at a speed of 50 to 200 m/min, preferably 50 to 150 m/min and most preferably 50 to 100 m/min.

The advantage of high-speed printing is that a low dose per unit area is required to achieve a fully cured film.

The ink of the present invention is cured by any means known in the art, such as exposure to actinic radiation and low-energy electron beam radiation.

It should be noted that the terms "dry" and "cure" are often used interchangeably in the art when referring to radiation-curable inkjet inks to mean the conversion of the inkjet ink from a liquid to solid by polymerisation and/or crosslinking of the radiation-curable material. Herein, however, by "drying" is meant the removal of the water by evaporation and by "curing" is meant the polymerisation and/or crosslinking of the radiation-curable material. Further details of the printing, drying and curing process are provided in WO 2011/021052.

In a preferred embodiment, the ink is cured by exposing the printed ink to a source of actinic radiation.

The source of actinic radiation can be any source of actinic radiation that is suitable for curing radiation-curable inks but is preferably a UV source. Suitable UV sources are well known in the art and a detailed description is not required. These include mercury discharge lamps, fluorescent tubes, light emitting diodes (LEDs), flash lamps and combinations thereof

In a particularly preferred embodiment, the source of actinic radiation is LEDs. It is particularly challenging to provide improved surface cure and a high cure speed when curing with a UV LED curing source. However, the inventors have surprisingly found that the ink of the present invention comprising the specific blend of monofunctional monomers allows for increased cure speed and improved surface cure when curing with a UV LED curing source, whilst maintaining a very low viscosity. This is particularly surprising given that the ink is based on monofunctional monomers.

LEDs are increasingly used to cure inkjet inks. UV light is emitted from a UV LED curing source. UV LED curing sources comprise one or more LEDs and are well known in the art. Thus, a detailed description is not required.

It will be understood that UV LED curing sources emit radiation having a spread of wavelengths. The emission of UV LED curing sources is identified by the wavelength which corresponds to the peak in the wavelength distribution. Compared to conventional mercury lamp UV sources, UV LED curing sources emit UV radiation over a narrow range of wavelengths on the wavelength distribution. The width of the range of wavelengths on the wavelength distribution is called a wavelength band. LEDs therefore have a narrow wavelength output when compared to other sources of UV radiation. By a narrow wavelength band, it is meant that at least 90%, preferably at least 95%, of the radiation emitted from the UV LED light source has a wavelength within a wavelength band having a width of 50 nm or less, preferably, 30 nm or less, most preferably 15 nm or less.

In a preferred embodiment, at least 90%, preferably at least 95%, of the radiation emitted from the UV LED curing source has a wavelength in a band having a width of 50 nm or less, preferably 30 nm or less, most preferably 15 nm or less.

LEDs have a longer lifetime and exhibit no change in the power/wavelength output overtime. LEDs also have the advantage of switching on instantaneously with no thermal stabilisation time and their use results in minimal heating of the substrate.

The ink may also be cured by exposing the printed ink to low-energy electron beam (ebeam).

The source of low-energy electron beam (ebeam) can be any source of low-energy electron beam that is suitable for curing radiation-curable inks. Suitable low-energy electron beam radiation sources include commercially available ebeam curing units, such as the EB Lab from ebeam Technologies with energy of 80-300 keV and capable of delivering a typical dose of 30-50 kGy at line speeds of up to 30 m/min. By "low-energy" for the ebeam, it is meant that it delivers an electron beam having a dose at the substrate of 100 kGy or less, preferably 70 kGy or less.

Ebeam curing is characterised by dose (energy per unit mass, measured in kilograys (kGy)) deposited in the substrate via electrons. Electron beam surface penetration depends upon the mass, density and thickness of the material being cured. Compared with UV penetration, electrons penetrate deeply through both lower and higher density materials. Unlike UV curing, photoinitiators are not required for ebeam curing to take place.

Ebeam curing is well-known in the art and therefore a detailed explanation of the curing method is not required. In order to cure the printed ink, the ink of the invention is exposed to the ebeam, which produces sufficient energy to instantaneously break chemical bonds and enable polymerisation or crosslinking.

There is no restriction on the ebeam dose that is used to cure the inkjet inks of the present invention other than that the dose is sufficient to fully cure the ink. Preferably, the dose is more than 10 kGy, more preferably more than 20 kGy, more preferably more than 30 kGy and most preferably more than 40 kGy. Preferably, the dose is less than 100 kGy, more preferably less than 90 kGy, more preferably less than 80 kGy and most preferably less than 70 kGy. Preferably, the dose is more than 30 kGy but less than 70 kGy, more preferably more than 30 kGy but less than 60 kGy and most preferably, more than 30 kGy but 50 kGy or less. Doses above 50 kGy may cause damage to the substrate, particularly the substrates used for food packaging applications, and so doses of 50 kGy or less are preferred.

The energy associated with these doses is 80-300 keV, more preferably 70-200 keV and most preferably 100 keV.

The ink cures to form a relatively thin polymerised film. The ink of the present invention typically produces a printed film having a thickness of 1 to 20 µm, preferably 1 to 10 µm, for example 2 to 5 µm. Film thicknesses can be measured using a confocal laser scanning microscope.

The invention will now be described with reference to the following examples, which are not intended to be limiting.

### Examples

### Example 1

Inkjet inks were prepared according to the formulations set out in Tables 1 and 2. The inkjet ink formulations were prepared by mixing the components in the given amounts. Amounts are given as weight percentages based on the total weight of the ink.

**Table 1 (inks of the invention)**

| **Component** | **Ink 1** | **Ink 2** | **Ink 3** | **Ink 4** |
|---|---|---|---|---|
| MEDOL-10 | 16.0 | 11.0 | 18.0 | 18.0 |
| DPHA | 1.5 | 0.5 | 1.0 | 1.5 |
| Benzyl acrylate | 43.9 | 47.0 | 40.5 | 39.5 |
| NVC | 20.0 | 20.0 | 20.0 | 20.0 |
| PEG600DA | 9.0 | 1.0 | 4.0 | 6.5 |
| UV12 | - | 0.5 | 0.5 | 0.5 |
| OH TEMPO | 0.5 | - | - | - |
| ITX | 0.1 | 4.0 | 4.0 | 4.0 |
| BAPO | 3.5 | 3.5 | 3.5 | 4.0 |
| BT-40279 | - | - | 0.5 | - |
| Cyan pigment dispersion | 4.5 | - | - | - |
| Magenta pigment dispersion | - | 11.5 | - | - |
| Yellow pigment dispersion | - | - | 7.0 | - |
| Black pigment dispersion | - | - | - | 5.0 |
| TegoRad 2010 | 1.0 | 1.0 | 1.0 | 1.0 |

**Table 2 (inks of the invention)**

| **Component** | **Ink 5** | **Ink 6** | **Ink 7** | **Ink 8** |
|---|---|---|---|---|
| MEDOL-10 | 15.0 | 3.5 | 21.0 | 19.6 |
| DPHA | 0.5 | 0.5 | 0.5 | 0.5 |
| Benzyl acrylate | 47.3 | 58.7 | 43.3 | 44.3 |
| NVC | 20.0 | 20.0 | 20.0 | 20.0 |
| PEG600DA | 3.0 | - | 0.5 | 3.0 |
| UV12 | - | - | 0.5 | 0.5 |
| TPGDA | 2.5 | - | - | - |
| UV1 | - | 0.5 | - | - |
| OH TEMPO | 0.5 | - | - | - |
| ITX | 4.0 | 4.0 | 4.0 | 4.0 |
| BAPO | 3.5 | 3.5 | 3.5 | 4.0 |
| BT-40279 | - | - | 1.0 | - |
| Cyan pigment dispersion | 3.6 | - | - | - |
| Magenta pigment dispersion | - | 9.2 | - | - |
| Yellow pigment dispersion | - | - | 5.6 | - |
| Black pigment dispersion | - | - | - | 4.0 |
| TegoRad 2010 | 0.1 | 0.1 | 0.1 | 0.1 |

Medol-10 and benzyl acrylate are monofunctional (meth)acrylate monomers, DPHA is a multifunctional (meth)acrylate monomer, NVC is an N-vinyl amide monomer, PEG600DA and TPGDA are difunctional (meth)acrylate monomers, UV12 and UV1 are stabilisers, OH TEMPO is a polymerisation inhibitor and a stabiliser, ITX and BAPO are photoinitiators, BT-40279 is a polymeric dispersing agent and TegoRad 2010 is a surfactant.

The cyan pigment dispersion contains 30% blue pigment, 10% polymeric dispersing aid, 59% monofunctional (meth)acrylate monomer and 1% stabiliser. The magenta pigment dispersion contains 30.0% magenta pigment, 12.0% polymeric dispersing aid, 56.5% monofunctional (meth)acrylate monomer and 1.0% stabiliser. The yellow pigment dispersion contains 33.9% pigment, 6.8% dispersing aid, 58.2% monofunctional (meth)acrylate monomer and 1.1% stabiliser. The black pigment dispersion contains 40% black pigment, 10% dispersing aid, 49% difunctional (meth)acrylate monomer and 1% stabiliser.

The pigment dispersions were prepared by mixing the components in the given amounts and passing the mixtures through a bead mill until the dispersions had a particle size of less than 0.3 microns. Amounts are given as weight percentages based on the total weight of the dispersion.

The viscosity of the inks of Tables 1 and 2 was measured using a Brookfield viscometer running at 30 rpm at 25°C.

Inks 1-4 have a viscosity of 6-8 mPas at 25°C and Inks 5-8 have a viscosity of 4.8-5.4 mPas at 25°C. Therefore, these inks have an ultra-low viscosity making them suitable for high-speed printing applications.

Inks 1 and 2 were then assessed for adhesion and elongation against commercially available comparative cyan and magenta inks (inks 9 and 10, respectively). Inks 9 and 10 were analysed and were found to contain approximately 76.3% and 76.2% by weight of VEEA, respectively, based on the total weight of the ink. The remainder of inks 9 and 10 was found to be photoinitiators, pigment and a radiation-curable oligomer.

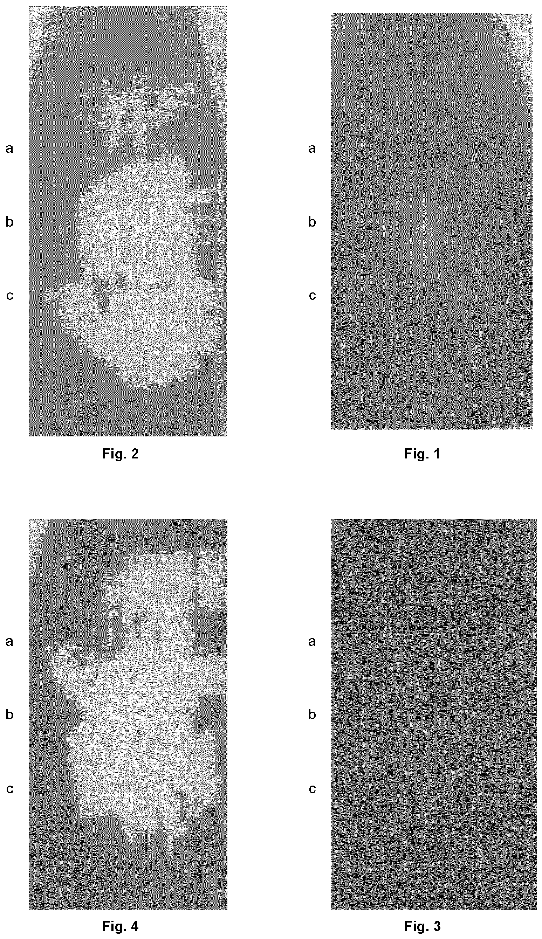

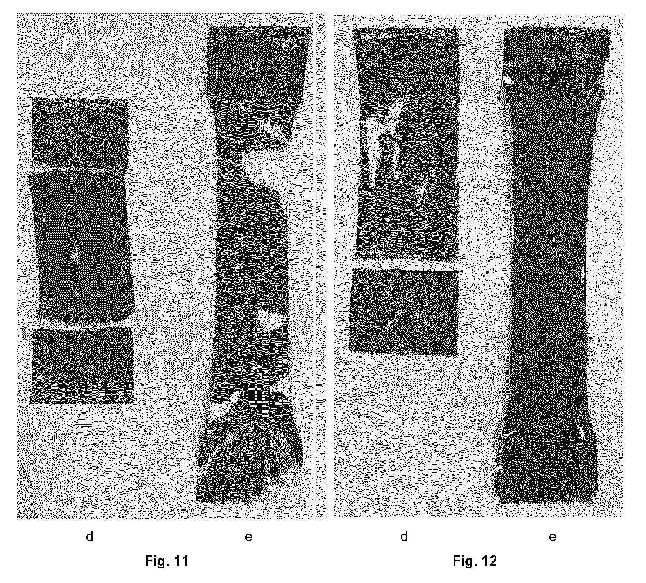

The tests and the results are set out below and in Figs 1-12.

### Adhesion

Inks 1 and 2 of the invention and comparative inks 9 and 10 were drawn down in 12 µm and 24 µm films using 12 and 24 µm wires wound K-bars onto an acrylic substrate (3mm Acrycast available from Stephen Webster Plastics).

The 12 µm drawdowns were cured using a 20 W Honle 395 nm LED lamp, a belt speed of 60 m/min, two passes and the lamp power was set to 25% (200 mJ/cm² per pass).

The 24 µm drawdowns were cured using a 20 W Honle 395 nm UV LED lamp, a belt speed of 25 m/min, two passes and the lamp power was set to 100% (770 mJ/cm2 per pass).

The lamp output was measured using an EIT Power Puck LED Cure.

Adhesion was assessed one hour after curing by subjecting each of the cured inks films to a cross hatch test according to ASTM D-3359 using 3M Scotch 610 tape, Nichiban adhesive tape and Elcometer ISO 2409 adhesive tape.

The results are shown in Figs. 1-8 using, from top to bottom of the cured ink films, 3M Scotch 610 tape (a), Nichiban adhesive tape (b) and Elcometer ISO 2409 adhesive tape (c).

Figs. 1-4 show the results for the 12 µm drawdowns with Fig. 1 corresponding to ink 1 of the invention, Fig. 2 corresponding to comparative ink 9, Fig. 3 corresponding to ink 2 of the invention and Fig. 4 corresponding to comparative ink 10.

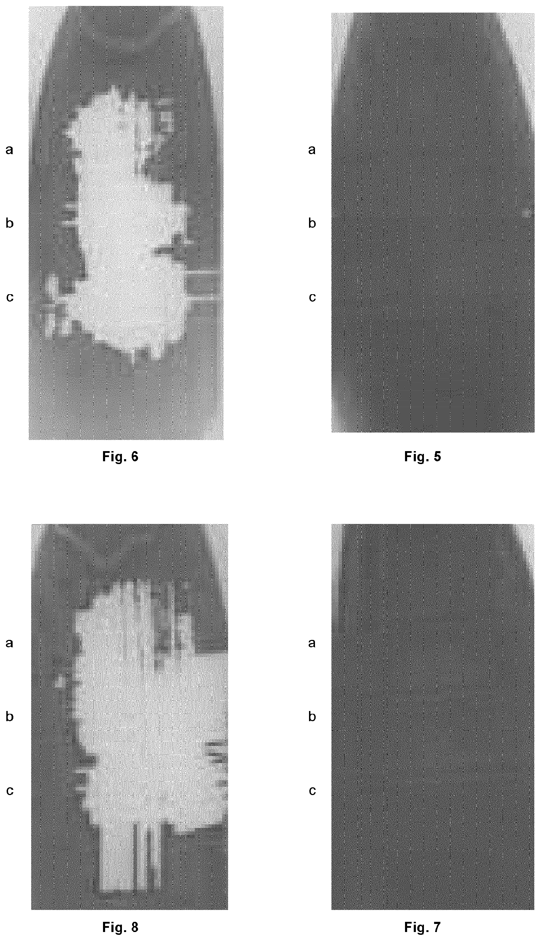

Figs. 5-8 show the results for the 24 µm drawdowns with Fig. 5 corresponding to ink 1 of the invention, Fig. 6 corresponding to comparative ink 9, Fig. 7 corresponding to ink 2 of the invention and Fig. 8 corresponding to comparative ink 10.

As can be seen from Figs. 1-8, inks of the present invention maintain excellent adhesion to the acrylic substrate, especially when tested with Elcometer ISO 2409 and Nichiban adhesive tape, compared to the comparative inks, whilst maintaining an ultra-low viscosity.

### Elongation

Inks 1 and 2 of the invention and comparative inks 9 and 10 were printed and cured as above except the substrate used was SAV (Avery 400).

Elongation was assessed one to two hours after curing using an Instron 5544 tensile tester for digital print sample elongation tests, ISO 527 and ASTM D638.

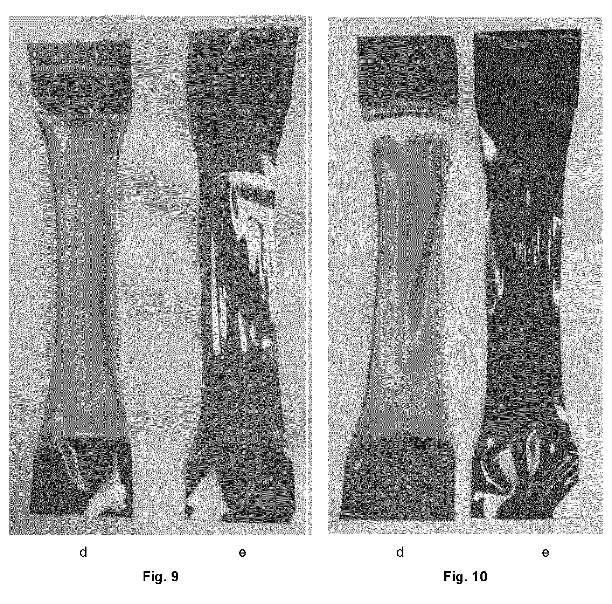

The results are shown in Table 3 below and accompanying Figs. 9-12.

**Table 3**

| **Ink** | **Film weight (µm)** | **% elongation** | **Accompanying Fig.** |
|---|---|---|---|
| Comparative ink 9 | 12 | 30.06 | 9d |
| Ink 1 of the invention | 12 | >120 | 9e |
| Comparative ink 10 | 12 | 33.87 | 10d |
| Ink 2 of the invention | 12 | >120 | 10e |
| Comparative ink 9 | 24 | 14.11 | 11d |
| Ink 1 of the invention | 24 | >120 | 11e |
| Comparative ink 10 | 24 | 19.71 | 12d |
| Ink 2 of the invention | 24 | >120 | 12e |

As can be seen from the results, the inkjet ink of the present invention provides excellent elongation compared to the comparative inks, whilst maintaining an ultra-low viscosity.

### Example 2

Inkjet inks were prepared according to the formulations set out in Table 4. The inkjet ink formulations were prepared by mixing the components in the given amounts. Amounts are given as weight percentages based on the total weight of the ink.

**Table 4**

| **Component** | **Ink 11** | **Ink 12** | **Ink 13** | **Ink 14** | **Ink 15** | **Ink 16** | **Ink 17** | **Ink 18** | **Ink 19** | **Ink 20** |
|---|---|---|---|---|---|---|---|---|---|---|
| PEA | - | 47.3 | 20.0 | - | 17.0 | - | - | - | - | - |
| MEDOL-10 | 17.0 | 17.0 | 17.0 | 17.0 | - | 17.0 | 17.0 | 17.0 | 17.0 | 17.0 |
| DPHA | 0.5 | 0.5 | 0.5 | 0.5 | 0.5 | 0.5 | 0.5 | 0.5 | 0.5 | 0.5 |
| Benzyl acrylate | 47.3 | - | 47.3 | 47.3 | 47.3 | 46.4 | 45.4 | 47.3 | 44.8 | 42.8 |
| NVC | 20.0 | 20.0 | - | 20.0 | 20.0 | 20.0 | 20.0 | 20.0 | 20.0 | 20.0 |
| PEG600DA | 3.0 | 3.0 | 3.0 | - | 3.0 | 3.0 | 3.0 | 3.0 | 3.0 | 3.0 |
| PEG400DA | - | - | - | 3.0 | - | - | - | - | - | - |
| TPGDA | 2.5 | 2.5 | 2.5 | 2.5 | 2.5 | 2.5 | 2.5 | - | 2.5 | 2.5 |
| 3MPDA | - | - | - | - | - | - | - | 2.5 | - | - |
| OH TEMPO | 0.5 | 0.5 | 0.5 | 0.5 | 0.5 | 0.5 | 0.5 | 0.5 | 0.5 | 0.5 |
| DETX | 2.0 | 2.0 | 2.0 | 2.0 | 2.0 | 2.0 | 2.0 | 2.0 | 2.0 | 2.0 |
| BAPO | 3.5 | 3.5 | 3.5 | 3.5 | 3.5 | 3.5 | 3.5 | 3.5 | 2.0 | - |
| TPO-L | - | - | - | - | - | - | - | - | 4.0 | 8.0 |
| Cyan pigment dispersion | 3.6 | 3.6 | 3.6 | 3.6 | 3.6 | 3.6 | 3.6 | 3.6 | 3.6 | 3.6 |
| TegoRad 2010 | 0.1 | 0.1 | 0.1 | 0.1 | 0.1 | 1.0 | 2.0 | 0.1 | 0.1 | 0.1 |
| Viscosity (mPas) | 5.21 | 10.46 | 5.93 | 5.02 | 5.59 | 5.32 | 5.74 | 5.08 | 5.38 | 5.65 |

PEA, Medol-10 and benzyl acrylate are monofunctional (meth)acrylate monomers, DPHA is a multifunctional (meth)acrylate monomer, NVC is an N-vinyl amide monomer, PEG600DA, PEG400DA, TPGDA and 3MPDA are difunctional (meth)acrylate monomers, OH TEMPO is a polymerisation inhibitor and a stabiliser, DETX, BAPO and TPO-L are photoinitiators and TegoRad 2010 is a surfactant.

The cyan pigment dispersion is the same as the cyan pigment dispersion in Example 1.

Inks 11, 14 and 16-20 are of the invention. The components were varied to find the optimal balance of properties. Ink 11 is the most preferred ink of the invention as this ink has the optimal balance of properties. In ink 14, PEG600DA has been replaced with PEG400DA. In inks 16 and 17, the amount of surfactant has been increased from 0.1% to 1.0% and 2.0%, respectively, and the amount of benzyl acrylate adjusted accordingly. In ink 18, TPGDA has been replaced with 3MPDA. In inks 19 and 20, BAPO has been replaced with a mixture of BAPO and TPO-L or completely with TPO-L, respectively, and the amount of benzyl acrylate adjusted accordingly.

Inks 12, 13 and 15 are comparative inks. In ink 12, benzyl acrylate has been replaced with PEA. In ink 13, NVC has been replaced with PEA. In ink 15, Medol-10 has been replaced with PEA.

The viscosity of the inks of Table 4 was measured using a Brookfield viscometer running at 30 rpm at 25°C.

Inks 11-20 have a viscosity of 5.02-10.46 mPas at 25°C. Therefore, these inks have an ultra-low viscosity making them suitable for high-speed printing applications.

Inks 11-20 were then assessed for adhesion, cure speed and elongation.

The tests and the results are set out below.

### Adhesion

Inks 11-20 were drawn down in 24 µm films using a 24 µm wire wound K-bar onto polycarbonate (PC), acrylic and Correx (fluted polypropylene) substrates. The acrylic substrate was 3mm Acrycast available from Stephen Webster Plastics.

The 24 µm drawdowns were cured using a 20 W Honle 395 nm UV LED lamp, a belt speed of 25 m/min, two passes and the lamp power was set to 100% (770 mJ/cm2 per pass).

The lamp output was measured using an EIT Power Puck LED Cure.

Adhesion was assessed one hour after curing by subjecting each of the cured inks films to a cross hatch test according to ASTM D-3359 using Nichiban adhesive tape.

The % removal results of the cured ink films are shown in Table 5.

**Table 5**

| **Substrate** | **Ink 11** | **Ink 12** | **Ink 13** | **Ink 14** | **Ink 15** | **Ink 16** | **Ink 17** | **Ink 18** | **Ink 19** | **Ink 20** |
|---|---|---|---|---|---|---|---|---|---|---|
| PC | 0 | 5 | 0 | 0 | 0 | 0 | 0 | 0 | 0 | 0 |
| Acrylic | 0 | 0 | 0 | 0 | 0 | 0 | 0 | 0 | 0 | 0 |
| Correx | 0 | 80 | 90 | 5 | 5 | 25 | 30 | 5 | 0 | 0 |

Only inks 11, 19 and 20 showed excellent adhesion to all three substrates.

There was a substantial decrease in adhesion to Correx when benzyl acrylate and NVC were replaced with PEA (see inks 12 and 13, respectively). There was a decrease in adhesion to Correx when Medol-10 was replaced with PEA (see ink 15). There was also a decrease in adhesion to Correx when PEG600DA was replaced with PEG400DA (see ink 14). There was a larger decrease in adhesion when the amount of surfactant present in the ink was increased to 1.0% and 2.0% (see inks 16 and 17, respectively). There was a slight decrease in adhesion to Correx when TPGDA was replaced with 3MPDA (see ink 18). Replacing BAPO with a mixture of BAPO and TPO-L or completely with TPO-L did not seem to impact adhesion (see inks 19 and 20, respectively).

### Cure speed

Inks 11-20 were drawn down in 12 µm films using a 12 µm wire wound K-bar onto SAV (Avery 400).

The 12 µm drawdowns were cured using a 20 W Honle 395 nm LED lamp, a belt speed of 60 m/min and the lamp power was set to 20%.

The number of passes to cure each ink film, where cure is defined as the production of a tack-free film and no offset onto oriented polypropylene (OPP) or photopaper (Epson, Glossy, 200 g/m²) is observed, is shown in Table 6.

**Table 6**

| **Substrate** | **Ink 11** | **Ink 12** | **Ink 13** | **Ink 14** | **Ink 15** | **Ink 16** | **Ink 17** | **Ink 18** | **Ink 19** | **Ink 20** |
|---|---|---|---|---|---|---|---|---|---|---|
| OPP | 2 | 1 | 2 | 2 | 2 | 2 | 2 | 2 | 2 | 2 |
| Photopaper | 2 | 2 | 4+ | 2 | 2 | 2 | 2 | 2 | 2 | 2 |

Each ink film was also assessed for ink offset after one pass. After the ink film had passed under the LED lamp once, a strip of OPP was applied to the surface of the ink film, removed and the degree of ink offset evaluated. The inks were given a score of 1 to 5. A score of 1 indicates significant ink transfer (100% removal of ink film). A large amount of ink removal indicates poor/low level of cure. A score of 5 indicates no ink transfer. No ink transfer indicates a good/high level of cure. The results are shown in Table 7.

**Table 7**

| Ink 11 | Ink 12 | Ink 13 | Ink 14 | Ink 15 | Ink 16 | Ink 17 | Ink 18 | Ink 19 | Ink 20 |
|---|---|---|---|---|---|---|---|---|---|
| 4 | 5 | 2 | 3 | 4 | 5 | 5 | 3 | 4 | 4 |

From the results of Tables 6 and 7, inks 11, 12, 15-17, 19 and 20 had an acceptable/high cure speed.

Replacing benzyl acrylate with PEA actually increased cure speed (see ink 12). There was a substantial decrease in cure speed when NVC was replaced with PEA (see ink 13). Replacing Medol-10 with PEA did not seem to impact cure speed (see ink 15). There was a decrease in cure speed when PEG600DA was replaced with PEG400DA (see ink 14). There was actually an increase in cure speed when the amount of surfactant present in the ink was increased to 1.0% and 2.0% (see inks 16 and 17, respectively). There was a decrease in cure speed when TPGDA was replaced with 3MPDA (see ink 18). Replacing BAPO with a mixture of BAPO and TPO-L or completely with TPO-L did not seem to impact cure speed (see inks 19 and 20, respectively).

### Elongation

Inks 11-20 were drawn down in 12 µm films using a 12 µm wire wound K-bar onto SAV (Avery 400).

The 12 µm drawdowns were cured using a 20 W Honle 395 nm UV LED lamp, a belt speed of 25 m/min, two passes and the lamp power was set to 100% (770 mJ/cm2 per pass).

The lamp output was measured using an EIT Power Puck LED Cure.

Elongation was assessed one to two hours after curing using an Instron 5544 tensile tester for digital print sample elongation tests, ISO 527 and ASTM D638.

The % elongation results of the cured ink films are shown in Table 8 below. A result of less than 90% is considered poor, 90-150% is considered acceptable for many applications, 150-180% is considered good and more than 180% is considered excellent.

**Table 8**

| **Ink 11** | **Ink 12** | **Ink 13** | **Ink 14** | **Ink 15** | **Ink 16** | **Ink 17** | **Ink 18** | **Ink 19** | **Ink 20** |
|---|---|---|---|---|---|---|---|---|---|
| 185 | 155 | 197 | 167 | 169 | 200 | 149 | 192 | 167 | 160 |

The cured ink films of inks 11, 13, 16 and 18 exhibited excellent elongation. The cured ink films of inks 12, 14, 15, 19 and 20 exhibited good elongation and the cured ink film of ink 17 exhibited acceptable elongation.

Replacing benzyl acrylate with PEA decreased elongation from excellent to good (see ink 12). Replacing NVC with PEA actually increased elongation but both inks 11 and 13 were still classed as having excellent elongation. Replacing Medol-10 with PEA decreased elongation from excellent to good (see ink 15). There was a decrease in elongation from excellent to good when PEG600DA was replaced with PEG400DA (see ink 14). There was an increase in elongation when the amount of surfactant present in the ink was increased to 1.0% but a decrease in elongation from excellent to only acceptable when the amount of surfactant present in the ink was increased to 2.0% (see inks 16 and 17, respectively). There was a slight increase in elongation when TPGDA was replaced with 3MPDA (see ink 18). Replacing BAPO with a mixture of BAPO and TPO-L or completely with TPO-L decreased elongation from excellent to good (see inks 19 and 20, respectively).

Based on all of the results, inks 11, 14 and 16-20 of the invention have a desirable balance of properties, with ink 11 having the optimal balance of properties, namely excellent adhesion, a high cure speed and excellent elongation, whilst maintaining an ultra-low viscosity.

## Claims

1. An inkjet ink comprising benzyl acrylate, (2-methyl-2-ethyl-1,3-dioxolane-4-yl)methyl acrylate, a di- and/or multifunctional (meth)acrylate monomer and an N-vinyl amide monomer and/or an N-(meth)acryloyl amine monomer, wherein the ink has a viscosity of less than 15 mPas at 25°C.

2. An inkjet ink as claimed in claim 1, wherein benzyl acrylate is present in an amount from 25 to 70% by weight, based on the total weight of the ink.

3. An inkjet ink as claimed in claim 1 or 2, wherein (2-methyl-2-ethyl-1,3-dioxolane-4-yl)methyl acrylate is present in an amount from 1 to 30% by weight, based on the total weight of the ink.

4. An inkjet ink as claimed in any preceding claim, wherein the N-vinyl amide monomer and/or the N-(meth)acryloyl amine monomer comprises N-vinyl caprolactam and/or N-acryloylmorpholine.

5. An inkjet ink as claimed in any preceding claim, wherein the N-vinyl amide monomer and/or the N-(meth)acryloyl amine monomer is present in a total amount from 5 to 35% by weight, based on the total weight of the ink.

6. An inkjet ink as claimed in any preceding claim, wherein the ink comprises 65 to 90% by weight in total of monofunctional monomers including benzyl acrylate, (2-methyl-2-ethyl-1,3-dioxolane-4-yl)methyl acrylate, and an N-vinyl amide monomer and/or an N-(meth)acryloyl amine monomer, based on the total weight of the ink.

7. An inkjet ink as claimed in any preceding claim, wherein the ink further comprises a difunctional monomer and the difunctional monomer comprises polyethylene glycol 600 diacrylate and/or tripropylene glycol diacrylate.

8. An inkjet ink as claimed in any preceding claim, wherein the di- and/or multifunctional monomer is present in a total amount of 15% by weight or less, based on the total weight of the ink, preferably wherein the di- and/or multifunctional monomer is present in a total amount of 0.5 to 10.0% by weight, based on the total weight of the ink.

9. An inkjet ink as claimed in any preceding claim, wherein the ink further comprises a photoinitiator, preferably phenylbis(2,4,6-trimethylbenzoyl) phosphine oxide.

10. An inkjet ink as claimed in any preceding claim, wherein the ink further comprises a surfactant, preferably present in 0.1 to 1.5% by weight, based on the total weight of the ink.

11. An inkjet ink as claimed in any preceding claim, wherein the ink contains less than 2% by weight of THFA, based on the total weight of the ink.

12. An inkjet ink as claimed in any preceding claim, wherein the ink contains less than 2% by weight in total of category 1A and 1B carcinogenic, mutagenic and reprotoxic substances, based on the total weight of the ink.

13. A method of inkjet printing comprising inkjet printing the inkjet ink as claimed in any preceding claim onto a substrate and curing the inkjet ink by exposing the inkjet ink to a curing source.

14. A method of inkjet printing as claimed in claim 13, wherein the curing source is a UV LED curing source.

## Patentansprüche

1. Tintenstrahltinte, umfassend Benzylacrylat, (2-Methyl-2-ethyl-1,3-dioxolan-4-yl)methylacrylat, ein di- und/oder multifunktionelles (Meth)acrylatmonomer und ein N-Vinylamidmonomer und/oder ein N-(Meth)acryloylaminmonomer, wobei die Tinte eine Viskosität von weniger als 15 mPas bei 25 °C aufweist.

2. Tintenstrahltinte nach Anspruch 1, wobei Benzylacrylat in einer Menge von 25 bis 70 Gewichts-%, basierend auf dem Gesamtgewicht der Tinte, vorhanden ist.

3. Tintenstrahltinte nach Anspruch 1 oder 2, wobei (2-Methyl-2-ethyl-1,3-dioxolan-4-yl)methylacrylat in einer Menge von 1 bis 30 Gewichts-%, basierend auf dem Gesamtgewicht der Tinte, vorhanden ist.

4. Tintenstrahltinte nach einem vorhergehenden Anspruch, wobei das N-Vinylamidmonomer und/oder das N-(Meth)acryloylaminmonomer N-Vinylcaprolactam und/oder N-Acryloylmorpholin umfasst.

5. Tintenstrahltinte nach einem vorhergehenden Anspruch, wobei das N-Vinylamidmonomer und/oder das N-(Meth)acryloylaminmonomer in einer Gesamtmenge von 5 bis 35 Gew.-%, basierend auf dem Gesamtgewicht der Tinte, vorhanden ist.

6. Tintenstrahltinte nach einem vorhergehenden Anspruch, wobei die Tinte insgesamt 65 bis 90 Gew.-% an monofunktionellen Monomeren umfasst, einschließlich Benzylacrylat, (2-Methyl-2-ethyl-1,3-dioxolan-4-yl)methylacrylat und einem N-Vinylamidmonomer und/oder einem N-(Meth)acryloylaminmonomer, basierend auf dem Gesamtgewicht der Tinte.

7. Tintenstrahltinte nach einem vorhergehenden Anspruch, wobei die Tinte ferner ein difunktionelles Monomer umfasst und das difunktionelle Monomer Polyethylenglycol-600-Diacrylat und/oder Tripropylenglycoldiacrylat umfasst.

8. Tintenstrahltinte nach einem vorhergehenden Anspruch, wobei das di- und/oder multifunktionelle Monomer in einer Gesamtmenge von 15 Gew.-% oder weniger, basierend auf dem Gesamtgewicht der Tinte, vorhanden ist, vorzugsweise wobei das di- und/oder multifunktionelle Monomer in einer Gesamtmenge von 0,5 bis 10,0 Gew.-%, basierend auf dem Gesamtgewicht der Tinte, vorhanden ist.

9. Tintenstrahltinte nach einem vorhergehenden Anspruch, wobei die Tinte ferner einen Photoinitiator, vorzugsweise Phenylbis(2,4,6-trimethylbenzoyl)phosphinoxid, umfasst.

10. Tintenstrahltinte nach einem vorhergehenden Anspruch, wobei die Tinte ferner ein Tensid umfasst, das vorzugsweise in 0,1 bis 1,5 Gewichts-%, basierend auf dem Gesamtgewicht der Tinte, vorhanden ist.

11. Tintenstrahltinte nach einem vorhergehenden Anspruch, wobei die Tinte weniger als 2 Gew.-% THFA enthält, basierend auf dem Gesamtgewicht der Tinte.

12. Tintenstrahltinte nach einem vorhergehenden Anspruch, wobei die Tinte insgesamt weniger als 2 Gew.-% krebserregende, mutagene und reproduktionstoxische Substanzen der Kategorie 1A und 1B enthält, basierend auf dem Gesamtgewicht der Tinte.

13. Verfahren zum Tintenstrahldrucken, umfassend Tintenstrahldrucken der Tintenstrahltinte nach einem vorhergehenden Anspruch auf ein Substrat und Aushärten der Tintenstrahltinte durch Aussetzen der Tintenstrahltinte gegenüber einer Aushärtungsquelle.

14. Verfahren zum Tintenstrahldrucken nach Anspruch 13, wobei die Aushärtungsquelle eine UV-LED-Aushärtungsquelle ist.

## Revendications

1. Encre pour jet d'encre comprenant de l'acrylate de benzyle, de l'acrylate de (2-méthyl-2-éthyl-1,3-dioxolane-4-yl)méthyle, un monomère (méth)acrylate di- et/ou multifonctionnel et un monomère N-vinylamide et/ou un monomère N-(méth) acryloylamine, dans laquelle l'encre présente une viscosité inférieure à 15 mPas à 25° C.

2. Encre pour jet d'encre selon la revendication 1, dans laquelle l'acrylate de benzyle est présent en une quantité de 25 à 70 % en poids, sur la base du poids total de l'encre.

3. Encre pour jet d'encre selon la revendication 1 ou 2, dans laquelle l'acrylate de (2-méthyl-2-éthyl-1,3-dioxolane-4-yl)méthyle est présent en une quantité de 1 à 30 % en poids, sur la base du poids total de l'encre.

4. Encre pour jet d'encre selon une quelconque revendication précédente, dans laquelle le monomère N-vinylamide et/ou le monomère N-(méth) acryloylamine comprend du N-vinylcaprolactame et/ou de la N-acryloylmorpholine.

5. Encre pour jet d'encre selon une quelconque revendication précédente, dans laquelle le monomère N-vinylamide et/ou le monomère N-(méth) acryloylamine est présent en une quantité totale de 5 à 35 % en poids, sur la base du poids total de l'encre.

6. Encre pour jet d'encre selon une quelconque revendication précédente, dans laquelle l'encre comprend 65 à 90 % en poids au total de monomères monofonctionnels comprenant de l'acrylate de benzyle, de l'acrylate de (2-méthyl-2-éthyl-1,3-dioxolane-4-yl)méthyle et un monomère N-vinylamide et/ou un monomère N-(méth) acryloylamine, sur la base du poids total de l'encre.

7. Encre pour jet d'encre selon l'une quelconque des revendications précédentes, dans laquelle l'encre comprend en outre un monomère difonctionnel et le monomère difonctionnel comprend du diacrylate de polyéthylène glycol 600 et/ou du diacrylate de tripropylène glycol.

8. Encre pour jet d'encre selon une quelconque revendication précédente, dans laquelle le monomère di- et/ou multifonctionnel est présent en une quantité totale de 15 % en poids ou moins, sur la base du poids total de l'encre, de préférence dans laquelle le monomère di- et/ou multifonctionnel est présent en une quantité totale de 0,5 à 10,0 % en poids, sur la base du poids total de l'encre.

9. Encre pour jet d'encre selon l'une quelconque des revendications précédentes, dans laquelle l'encre comprend en outre un photoinitiateur, de préférence de l'oxyde de phénylbis (2,4,6-triméthylbenzoyl) phosphine.

10. Encre pour jet d'encre selon une quelconque revendication précédente, dans laquelle l'encre comprend en outre un tensioactif, de préférence présent à raison de 0,1 à 1,5 % en poids, sur la base du poids total de l'encre.

11. Encre pour jet d'encre selon une quelconque revendication précédente, dans laquelle l'encre contient moins de 2 % en poids de THFA, sur la base du poids total de l'encre.

12. Encre pour jet d'encre selon une quelconque revendication précédente, dans laquelle l'encre contient moins de 2 % en poids au total de substances cancérigènes, mutagènes et reprotoxiques de catégorie 1A et 1B, sur la base du poids total de l'encre.

13. Procédé d'impression par jet d'encre comprenant l'impression par jet d'encre de l'encre pour jet d'encre selon une quelconque revendication précédente sur un substrat et le durcissement de l'encre pour jet d'encre par exposition de l'encre pour jet d'encre à une source de durcissement.

14. Procédé d'impression par jet d'encre selon la revendication 13, dans lequel la source de durcissement est une lumière à LED UV.
